# EUROPEAN PATENT APPLICATION

(11) **EP 1 829 832 A1**
(43) Date of publication of application: **05.09.2007**
(21) Application number: 05790230.6
(22) Date of filing: 04.10.2005
(51) Int. Cl.: C03C 8/04, C03C 8/10, H01J 11/02

(54) **PLASMA DISPLAY PANEL**

(30) Priority: 07.10.2004 JP 2004294756
(71) Applicant: MATSUSHITA ELECTRIC INDUSTRIAL CO., LTD., Osaka 571-8501 (JP)
(72) Inventor: MIYAZAKI, Akinobu, c/o Matsushita Electric Industrial Co., Ltd., 3-7, Shiromi 1-chome, Chuo-ku, Osaka-shi, Osaka 540-6319 (JP); HASEGAWA, Shinya, c/o Matsushita Electric Industrial Co., Ltd., 3-7, Shiromi 1-chome, Chuo-ku, Osaka-shi, Osaka 540-6319 (JP); TOYODA, Seiji, c/o Matsushita Electric Industrial Co., Ltd., 3-7, Shiromi 1-chome, Chuo-ku, Osaka-shi, Osaka 540-6319 (JP); KOSHIZUKA, Tsutomu, c/o Matsushita Electric Industrial Co., Ltd., 3-7, Shiromi 1-chome, Chuo-ku, Osaka-shi, Osaka 540-6319 (JP)
(74) Representative: Vossius & Partner
(86) International application number: PCT/JP2005/018359
(87) International publication number: WO 2006/038621

(57) **Abstract**

A plasma display panel of the present invention includes a display electrode 102 and an address electrode 112 as well as a dielectric layer (a dielectric layer 106 and/or a dielectric layer 113) that is formed on at least one electrode selected from the group consisting of the display electrode 102 and the address electrode 112. The at least one dielectric layer includes glass having the following composition, as its main constituent element: 0 to 15 wt% SiO₂; 10 to 50 wt% B₂O₂; 26 to 50 wt% ZnO; 0 to 10 wt% Al₂O₃; 2 to 30 wt% Bi₂O₃; 0 to 0.1 wt% PbO; and 5 to 38 wt% RO, where RO denotes at least one oxide selected from the group consisting of CaO, SrO, and BaO.

## Description

### TECHNICAL FIELD

The present invention relates to a plasma display panel.

### BACKGROUND ART

Recently, flat panel displays such as plasma display panels (hereinafter also referred to as a "PDP"), FEDs, and liquid crystal displays have been receiving attention as displays that can achieve reductions in thickness and weight.

Such a flat panel display is provided with a front panel and a back panel, each of which includes a glass substrate and components disposed thereon. The front panel and the back panel are arranged to oppose each other and the peripheries thereof are sealed with glass.

The front panel includes a front glass substrate. Stripe-like display electrodes are formed on the surface thereof and a dielectric layer and a protective layer further are formed thereon. The back panel includes a back glass substrate. Stripe-like address electrodes are formed on the surface thereof and a dielectric layer is formed thereon. Barrier ribs are formed between adjacent address electrodes, and phosphor layers each are formed between adjacent barrier ribs.

The front panel and the back panel are arranged so that the display electrodes and the address electrodes are orthogonal to each other. The sealed spaces that are formed between the front panel and the back panel are filled with a discharge gas.

Two display electrodes compose a pair of electrodes. In the following description, one of them may be referred to as an "X electrode" while the other may be referred to as a "Y electrode" in some cases. The region defined by such a pair of display electrodes and one address electrode that cross each other three-dimensionally, with a discharge space being interposed therebetween, serves as a cell that contributes to an image display.

Hereafter, a dielectric layer of a PDP is described in detail. The dielectric layer of the PDP is required to have: (1) higher insulation since it is formed on electrodes; (2) a lower dielectric constant to achieve lower power consumption; and (3) a thermal expansion coefficient that matches with that of the glass substrate so that neither peeling nor cracks occur. Furthermore, in order that the glass that composes the dielectric layer formed above the front glass substrate can use the light emitted from phosphors as display light efficiently, the glass usually is required to be amorphous glass having high transmissivity for visible light.

The dielectric layer usually is formed by applying a glass paste onto a glass substrate by, for instance, screen printing and then drying and baking it. The glass paste contains glass powder, resin, and a solvent and also may include an inorganic filler and an inorganic pigment in some cases. On the other hand, soda lime glass generally is employed as the glass substrate that is used for the PDP, from the viewpoints of price and availability. The glass paste therefore is baked at a temperature of 600°C or lower at which the glass substrate does not deform.

When the dielectric layer of the PDP is to be formed, it is necessary to bake its material on the substrate. However, since the baking must be carried out at a temperature that does not cause the deformation of the glass substrate, it is necessary to form the dielectric layer with glass having a relatively low melting point. Hence, currently, PbO-SiO₂-based glass containing PbO as its main material is mainly used.

In such a situation, with consideration given to environmental problems, dielectric layers that are free from lead are being developed. For instance, Bi₂O₃-B₂O₃-ZnO-based glass has been proposed (for example, JP2003-128430A and JP2002-308645A). Furthermore, Bi₂O₃-B₂O₃-based low-melting glass has been proposed as a material that is free from lead and has low reactivity to electrodes (for instance, JP2002-53342A). In addition, glass has been proposed that contains BaO, B₂O₃, and SiO₂ to prevent the dielectric layer from being colored (for example, JP2001-48577A).

Hereafter, the protective layer of the PDP is described in detail. The protective layer is formed for the purposes of protecting the dielectric layer from ion bombardment during discharge and allowing discharge to occur at a lower discharge starting voltage. In order to attain the purposes, currently the protective layer is formed of a material containing magnesium oxide (MgO) as its main component. Magnesium oxide has advantages in its high resistance to sputtering and its high secondary electron emission coefficient.

In such a situation, conventional PDPs have a problem that is referred to as a "discharge time lag". This is a phenomenon in which a time lag occurs between the time when pulses for an address discharge are applied to the electrodes and the time when actually discharge occurs, in an address period. A considerable discharge time lag results in a higher probability that the address discharge has not occurred even at the end of the application of the address pulses, and thereby a writing failure tends to occur. This discharge time lag tends to occur increasingly with an increase in driving speed. A method in which a predetermined amount of hydrogen is added to a protective layer is disclosed as a measure to counter such a discharge time lag (for example, JP2002-33053A).

As described above, conventionally, the dielectric layers formed using glass that is free from lead have been proposed. However, further improvements in the characteristics of the PDP that is produced using such a dielectric layer are being required.

### DISCLOSURE OF INVENTION

In such a situation, one of the objects of the present invention is to provide a PDP having excellent characteristics and a dielectric layer formed of glass that is substantially free from lead.

In order to achieve the above-mentioned object, a plasma display panel of the present invention includes a display electrode and an address electrode. The plasma display panel includes a dielectric layer that is formed on at least one electrode selected from the group consisting of the display electrode and the address electrode. The dielectric layer includes glass having the following composition as its main constituent element:
0 to 15 wt% SiO₂;
10 to 50 wt% B₂O₃;
26 to 50 wt% ZnO;
0 to 10 Wt% Al₂O₃;
2 to 30 wt% Bi₂O₃;
0 to 0.1 wt% PbO; and
5 to 38 wt% RO,
where RO denotes at least one oxide selected from the group consisting of CaO, SrO, and BaO.

In this connection, the "main constituent element" denotes that the amount thereof contained in the dielectric layer is at least 50 wt%.

The present invention makes it possible to obtain a PDP having excellent characteristics and a dielectric layer formed of glass that is substantially free from lead. Particularly, when a protective layer containing MgO as its main component is formed on the dielectric layer, the protective layer has improved characteristics, which prevents the occurrence of discharge time lag and variations in duration of the discharge time lag. Even if the discharge time lag does occur, variations in the duration of the discharge time lag among the respective cells can be reduced as compared to the conventional case, and the durations of the discharge time lag are equalized. When the variations in duration of the discharge time lag are not great as mentioned above, it becomes possible to prevent substantially the writing failure from occurring due to the discharge time lag by exploring a measure such as, for example, delaying the timing of the pulse application in an address period for a predetermined period of time in the whole panel.

### BRIEF DESCRIPTION OF DRAWINGS

FIG. 1 is a schematic view showing an example of the PDP according to the present invention.
FIG. 2 is a diagram showing an example of the driving waveform of the PDP.
FIG. 3 is a graph showing the relationship between the content of ZnO and discharge variations.
FIG. 4 is a graph showing the relationship between the content of ZnO and the relative intensity of the luminescence peak at about 740 nm.

### DESCRIPTION OF THE INVENTION

Hereafter, embodiments of the present invention are described. The following descriptions, however, are directed to mere examples of the present invention and the present invention therefore is not limited by them. The PDP of the present invention is characterized in the dielectric layer (for example, a dielectric layer and a protective layer). Members to be used for the PDP other than that can be well-known PDP members.

A PDP of the present invention includes display electrodes and address electrodes. This PDP further includes a dielectric layer formed on at least one electrode selected from the group consisting of the display electrodes and the address electrodes. The dielectric layer contains, as its main constituent element, glass having the following composition:
0 to 15 wt% SiO₂;
10 to 50 wt% B₂O₃;
26 to 50 wt% ZnO;
0 to 10 wt% Al₂O₃;
2 to 30 wt% Bi₂O₃;
0 to 0.1 wt% PbO; and
5 to 38 wt% RO,
where RO denotes at least one oxide selected from the group consisting of CaO, SrO, and BaO.

The above-mentioned glass is a lead-free glass that is substantially free from lead. This lead-free glass, however, may contain a trace amount of lead that is difficult to remove industrially. The amount of lead contained in the lead-free glass is 0.1 wt% or less, preferably 0.05 wt% or less, and further preferably 0.01 wt% or less.

In other words, the glass to be the main constituent element of the dielectric layer is lead-free glass that is substantially free from lead and has the following composition:
0 to 15 wt% SiO₂;
10 to 50 wt% B₂O₃;
26 to 50 wt% ZnO;
0 to 10 wt% Al₂O₃;
2 to 30 wt% Bi₂O₃; and
5 to 38 wt% RO,
where RO denotes at least one oxide selected from the group consisting of CaO, SrO, and BaO.

The PDP of the present invention may include a protective layer formed so as to cover the dielectric layer. The protective layer may contain MgO as its main component (in this case, its content is at least 70 wt%). The amount of MgO contained in the protective layer generally is at least 90 wt%. For example, the protective layer is made of MgO alone.

In the PDP of the present invention, the amount of ZnO contained in the glass composing the dielectric layer is at least 26 wt%. The ion diameter of Zn is close to that of Mg. Accordingly, when a protective layer containing MgO as its main component is used, the use of a dielectric layer containing at least a certain amount of ZnO makes it possible to improve the consistency at the interface between the dielectric layer and the protective layer. Conceivably, this results in increased homogeneity and structural stability of the protective layer and thereby the characteristics of the PDP improve. Furthermore, the upper limit of the content of ZnO is the maximum content that allows stable glass to be obtained. In this connection, a similar effect can be expected to be obtained even when using alkaline-earth metal instead of ZnO. In that case, however, there is a problem in that the stability of glass as a dielectric deteriorates.

Preferably, the above-mentioned lead-free glass has a linear thermal expansion coefficient at 30 to 300C° in the range of 60 × 10⁻⁷ to 85 × 10⁻⁷/C°. This configuration makes it possible to reduce the difference in thermal expansion coefficient between the glass substrate and the dielectric layer and therefore can prevent the dielectric from being broken or being cracked.

The above-mentioned dielectric layer may be formed by applying a glass paste containing powder of the lead-free glass, a solvent, and resin so as to cover the at least one electrode mentioned above and then baking it. When the glass paste is used, a dielectric layer containing lead-free glass as its main constituent element can be formed into an arbitrary shape in an arbitrary place.

### Plasma Display Panel

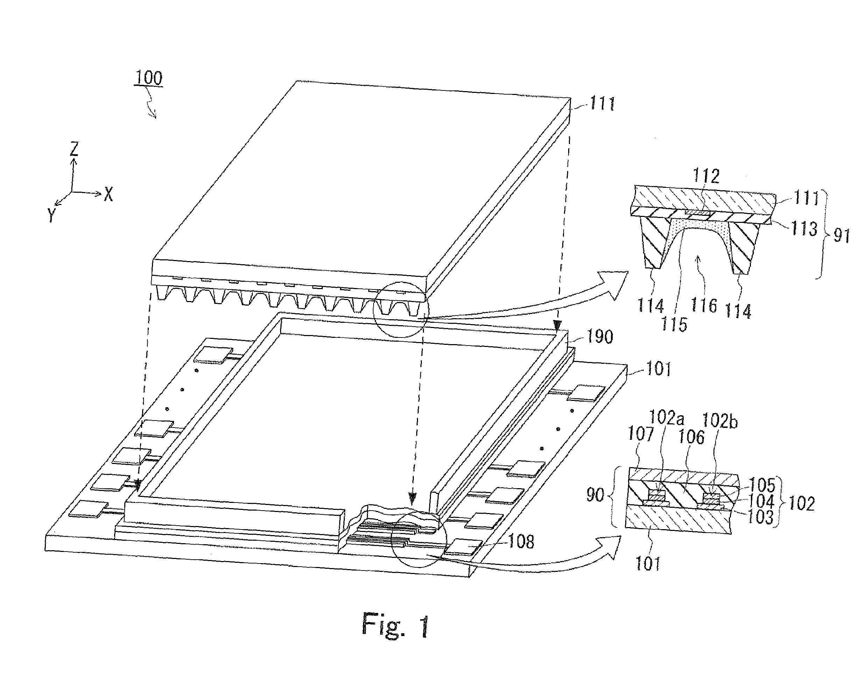

FIG. 1 shows a schematic view of an example of the plasma display panel according to the present invention.

A PDP 100 shown in FIG. 1 is a PDP of an alternating current type (an AC type) and includes a front panel 90 and a back panel 91 that are disposed so that their principal planes oppose to each other.

The front panel 90 includes a front glass substrate 101, display electrodes 102, a dielectric layer 106, and a protective layer 107. The front glass substrate 101 is a member serving as a base of the front panel 90. The display electrodes 102 are formed on the front glass substrate 101.

A display electrode 102 includes a transparent electrode 103, a black electrode film 104, and a bus electrode 105. The transparent electrode 103 can be formed of a transparent conductive film such as one made of ITO, for example. The black electrode film 104 is a black film containing ruthenium oxide as its main component. The black electrode film 104 prevents the reflection of external light when viewed from the back side of the glass. The bus electrode 105 is an electrode that contains silver as its main component and has high electroconductivity. The bus electrode 105 reduces the value of resistance of the display electrode 102. A terminal area 108 for connecting the bus electrode 105 to a driving circuit is formed at one end of the bus electrode 105. Two adjacent display electrodes 102 compose a pair of electrodes. Hereafter, one of the pair of display electrodes 102 is described as an "X electrode 102a" while the other is described as a "Y electrode 102b" in some cases.

The display electrode 102 is covered with the dielectric layer 106. The dielectric layer 106 is covered with the protective layer 107. The dielectric layer 106 is formed of the lead-free glass to be described later. The protective layer 107 contains MgO as its main component.

The back panel 91 includes a back glass substrate 111, address electrodes 112, a dielectric layer 113, barrier ribs 114, and a phosphor layer 115 formed between two adjacent barrier ribs 114. The region formed between two adjacent barrier ribs 114 serves as a discharge space 116.

The address electrodes 112 are covered with the dielectric layer 113. Like the dielectric layer 106, the dielectric layer 113 can be formed of the lead-free glass to be described later but may be formed of other glass.

Phosphors of the phosphor layer 115 are not particularly limited and can be well-known phosphors. For instance, BaMgAl₁₀O₁₇:Eu can be used as blue phosphors. Furthermore, Zn₂SiO₄:Mn can be used as green phosphors while Y₂O₃:Eu can be used as red phosphors.

The front panel 90 and the back panel 91 are superimposed on each other as shown in FIG. 1 and are fixed and sealed with a sealing glass 190 disposed at their peripheries.

The discharge space 116 is charged with a discharge gas (a filler gas). For instance, the discharge space 116 is charged with rare gas such as He, Xe, or Ne under a pressure of about 66.5 to 79.8 kPa (500 to 600 Torr).

A pair of adjacent display electrodes 102 (an X electrode 102a and a Y electrode 102b) and one address electrode 112 cross each other with the discharge space 116 formed therebetween. The region defined by the intersection serves as a cell that contributes to an image display.

A method of displaying an image on the PDP 100 is described below. First, voltage is applied between an X electrode 102a and an address electrode 112 that cross a cell to be illuminated, and thereby an address discharge occurs. Subsequently, a pulse voltage is applied to the X electrode 102a and the Y electrode 102b that cross the cell and thereby a sustain discharge is caused. This sustain discharge causes ultraviolet rays to be emitted in the discharge space 116. The ultraviolet rays thus emitted are converted into visible light by the phosphor layer 115. Thus, the cell is illuminated and thereby an image is displayed.

### Method of Driving Plasma Display Panel

An example of the method of driving the PDP 100 is described below. In the PDP 100, an AC voltage of several tens of kilohertz to several hundreds of kilohertz is applied to a gap between a pair of display electrodes (an X electrode 102a and a Y electrode 102b) with the driving part (not shown in the drawing). This voltage application causes a discharge to occur in the cell and thereby Xe atoms are excited to emit ultraviolet rays. The ultraviolet rays then excite the phosphor layer 115 and thereby visible light is generated.

The method of driving the PDP is not limited. For example, a display system can be employed in which a gradation display is obtained with the subfield being divided with respect to time. In this system, a field to be displayed is divided into a plurality of subfields and each subfield further is divided into a plurality of periods. In the initialization period of each subfield, an address discharge occurs throughout the screen to store wall charges. In the subsequent discharge sustain period, an AC voltage (a sustain voltage) is applied to all the discharge cells. This allows a discharge to be sustained for a certain period of time and thereby an emission display is performed.

In this driving period, in order to perform the gradation display through the control of light emission with two values, i.e. ON and OFF, in each cell in the driving part, each of the time series fields that are images input from the outside is divided into 6 subfields, for example. They are weighted so that the relative ratio in brightness of the respective subfields is, for instance, 1 : 2 : 4 : 8 : 16 : 32, and thereby the number of times of light emission caused by the sustain discharge in each subfield is set.

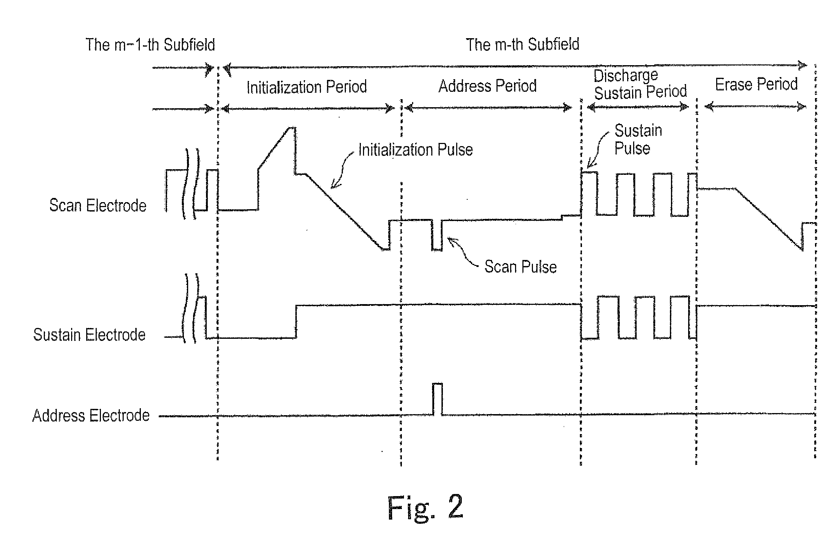

FIG. 2 shows an example of the driving waveform of the PDP 100. FIG.2 shows the driving waveform of the m-th subfield of a field. As shown in FIG. 2, an initialization period, an address period, a discharge sustain period, and an erase period are allocated in each subfield.

The initialization period is a period in which in order to eliminate the effect of illumination of the preceding cell (i.e. the effect of accumulated wall charges), the wall charges of the whole screen are erased and then wall charges are accumulated uniformly. In the waveform shown in FIG. 2, a reset waveform that exceeds the discharge starting voltage Vf is applied to all the display electrodes 102 (the X electrodes 102a and the Y electrodes 102b). An initialization discharge (a weak plane discharge) occurs in every cell and thereby wall charges are accumulated in every cell, so that the entire screen is brought into a uniformly charged state.

The address period is a period in which a cell selected according to an image signal allocated to the subfield is addressed (i.e. a period for setting illumination/non-illumination). In the address period, the scan electrode (the X electrode 102a) is biased towards positive potential with respect to the ground potential. In this state, each line is selected sequentially from the line located in the uppermost part of the panel (a group of cells located in one row corresponding to a pair of display electrodes) and a negative scan pulse is applied to the corresponding scan electrode (the X electrode 102a). On the other hand, a positive address pulse is applied to the address electrode 112 corresponding to the cell to be illuminated. Such voltage applications allow an address discharge to occur only in the cell to be illuminated and thereby wall charges are accumulated.

The discharge sustain period is a period in which the state of illumination resulting from the address discharge is extended to sustain the discharge, and brightness to be obtained according to the gradation sequence is secured through the sustaining of the discharge. In this period, in order to prevent unnecessary discharge from occurring, all the address electrodes 112 are biased towards positive potential while positive sustain pulses are applied to all the sustain electrodes (the Y electrodes 102b). Thereafter, the sustain pulse is applied to the scan electrode (the X electrode 102a) and the sustain electrode (the Y electrode 102b) alternately. Thus discharges are repeated for a predetermined period of time.

In the erase period, pulses that are reduced gradually are applied to the scan electrode (the X electrode 102a), which erases the wall charges.

In an example of the PDP 100, the respective discharges that occur in the subfields generate a resonance line having an acute peak at 147 nm due to Xe and vacuum ultraviolet rays formed of molecular beams around 173 nm. The respective phosphor layers 115 are irradiated with the vacuum ultraviolet rays and thereby visible light is generated. Multicolor displays having various gradations can be obtained according to the combination of subfield units per RGB.

### Lead-Free Glass

The dielectric layer 106 contains lead-free glass that is substantially free from lead as its main constituent element. The lead-free glass has the following composition:
0 to 15 wt% SiO₂;
10 to 50 wt% B₂O₃;
26 to 50 wt% ZnO;
0 to 10 wt% Al₂O₃;
2 to 30 wt% Bi₂O₃;
0 to 0.1 wt% PbO; and
5 to 38 wt% RO,
where RO denotes at least one oxide selected from the group consisting of CaO, SrO, and BaO.

The amount of the lead-free glass contained in the dielectric layer 106 is at least 50 wt% (for instance, at least 80 wt%, at least 90 wt%, or at least 95 wt%). The dielectric layer 106 may be made substantially of the lead-free glass or may be made of the lead-free glass alone. The glass component of the dielectric layer 106 is the above-mentioned lead-free glass. The dielectric layer 106 therefore is substantially free from lead. When the dielectric layer 106 consists of a plurality of layers, at least one of them should contain the above-mentioned lead-free glass as its main constituent element as long as the effects of the present invention can be obtained. In this case, it is preferable that the layer adjoined to the protective layer, i.e. the layer nearest to the surface of the dielectric layer contain the above-mentioned lead-free glass as its main constituent element.

Hereafter, each component of the above-mentioned lead-free glass to be used in the present invention is described.

SiO₂ has an effect of stabilizing glass. The content thereof is 15 wt% or less. When the content of SiO₂ exceeds 15 wt%, the softening point increases, which makes it difficult to carry out the baking at a predetermined temperature. The content of SiO₂ is preferably 10 wt% or less. Furthermore, in order to allow less air bubbles to remain after the baking, it is preferable that the glass be allowed to have a lower viscosity during the baking. For that purpose, it is preferable that the content of SiO₂ be set at 1 wt% or less.

B₂O₃ is an essential component of the lead-free glass of the present invention. The content thereof is 10 to 50 wt%. The B₂O₃ content exceeding 50 wt% results in deteriorated durability of glass as well as a decreased thermal expansion coefficient and an increased softening point of the glass. As a result, it becomes difficult to carry out the baking at the predetermined temperature. On the other hand, when the B₂O₃ content is less than 10 wt%, the glass becomes unstable and tends to devitrify. A preferable content of B₂O₃ therefore is 15 to 50 wt%.

ZnO is an essential component of the lead-free glass of the present invention and has an effect of stabilizing glass. The ZnO content is 26 to 50 wt%. When the ZnO content exceeds 50 wt%, glass tends to be crystallized and therefore stable glass cannot be obtained. On the other hand, when the ZnO content is less than 26 wt%, glass has a higher softening point. In this case, the baking therefore is difficult to carry out at the predetermined temperature and the glass tends to devitrify. In addition, when the ZnO content is less than 26 wt%, it is difficult to obtain an effect of improving the characteristics of the protective layer. A preferable ZnO content therefore is 32 to 50 wt%.

Al₂O₃ has an effect of stabilizing glass and the content thereof is 10 wt% or less. The Al₂O₃ content exceeding 10 wt% may cause devitrification of glass and also results in a higher softening point, which causes difficulty in baking at the predetermined temperature. Preferably, the Al₂O₃ content is 8 wt% or less but at least 0.01 wt%. When the Al₂O₃ content is at least 0.01 wt%, further stable glass can be obtained.

Bi₂O₃ is an essential component of the lead-free glass of the present invention and has effects of lowering the softening point and increasing the thermal expansion coefficient. The content thereof is 2 to 30 wt%. The Bi₂O₃ content exceeding 30 wt% results in a higher thermal expansion coefficient. Furthermore, the Bi₂O₃ content exceeding 30 wt% results in an excessively high dielectric constant of the dielectric layer, which increases power consumption. On the other hand, the Bi₂O₃ content of less than 2 wt% results in a higher softening point, which causes difficulty in baking at the predetermined temperature.

CaO, SrO, and BaO have effects of improving water resistance, preventing phase separation of glass from occurring, and improving the thermal expansion coefficient relatively, for example. The total of the contents of these alkaline-earth metal oxides is 5 to 38 wt%. When the total of the contents of CaO, SrO, and BaO exceeds 38 wt%, the glass may devitrify and may have an excessively high thermal expansion coefficient. On the other hand, when the total thereof is less than 5 wt%, the above-mentioned effects are difficult to obtain. Accordingly, the total of the contents of CaO, SrO, and BaO is in the range of 5 to 38 wt%. The CaO content is in the range of 0 to 38 wt%. The SrO content is in the range of 0 to 38 wt% while the BaO content also is in the range of 0 to 38 wt%.

Preferably, the total of the contents of ZnO and Bi₂O₃ (i.e. ZnO + Bi₂O₃) is 35 to 65 wt%. In order to produce a dielectric layer that has a lower softening point and higher transmissivity and does not react with electrodes at a temperature of 600°C or lower, it is preferable that the total content (ZnO + Bi₂O₃) be at least 35 wt%. However, when the total content exceeds 65 wt%, the glass may tend to crystallize in some cases.

Furthermore, it is preferable that a value of ZnO / (SiO₂ + Al₂O₃), which is a ratio between the ZnO content and the total of the contents of SiO₂ and Al₂O₃ (i.e. SiO₂ + Al₂O₃), be at least 3. ZnO has a greater effect of lowering the softening point as compared to SiO₂ and Al₂O₃. Hence, when the ratio is set at 3 or higher, a dielectric layer can be produced that has a lower softening point and higher transmissivity and does not react with electrodes at a temperature of 600°C or lower.

Furthermore, it is preferable that a value of Bi₂O₃ /(B₂O₃ + ZnO), which is a ratio between the Bi₂O₃ content and the total of the contents of B₂O₃ and ZnO (i.e. B₂O₃ + ZnO), be 0.5 or lower. Bi₂O₃ allows glass to have a higher dielectric constant as compared to B₂O₃ and ZnO. Accordingly, when the above-mentioned range is employed, a dielectric layer with a lower dielectric constant can be formed and thereby the power consumption can be reduced.

### Example of Lead-Free Glass

In an example of the above-mentioned lead-free glass, the Bi₂O₃ content may be 26 wt% or less (for example, 13 wt% or less). When the Bi₂O₃ content is 26 wt% or less, the dielectric layer can have a lower dielectric constant. This lead-free glass employed as an example has the following composition:
0 to 15 wt% SiO₂;
10 to 50 wt% B₂O₃;
26 to 50 wt% ZnO;
0 to 10 wt% Al₂O₃;
2 to 26 wt% (for example 2 to 13 wt%) Bi₂O₃;
0 to 0.1 wt% PbO; and
5 to 38 wt% RO.

The lead-free glass of the present invention contains the components mentioned above and typically consists of the above-mentioned components alone. The lead-free glass, however, may contain other components as long as the effects of the present invention can be obtained. In this case, the total of the contents of the other components is preferably 10 wt% or less, and more preferably 5 wt% or less. Examples of the other components include components that are added to glass for the purposes of, for instance, adjusting the softening point and thermal expansion coefficient, stabilizing glass, and improving the chemical durability of glass. Specifically, examples of the other components include MgO, X₂O (X₂O denotes Li₂O, Na₂O, K₂O, Rb₂O, or Cs₂O), TiO₂, ZrO₂, La₂O₃, Nb₂O5, MoO₃, WO₃, TeO₂, Ag₂O, etc.

The above-mentioned lead-free glass can be used suitably as a material of the dielectric layer of the PDP. Examples of the glass substrate to be used for the PDP include soda-lime glass that is sheet glass for windows and that generally is readily obtainable, and high strain point glass that has been developed for PDPs. Generally, such glass has heat resistance to a temperature up to 600°C and a linear thermal expansion coefficient of 75 × 10⁻⁷ to 85 × 10⁻⁷/°C.

The dielectric layer of the PDP is formed by applying a glass paste to a glass substrate and then baking it. In order to prevent the glass substrate from deforming, this baking needs to be carried out at a temperature of 600°C or lower. Furthermore, in order to prevent the glass substrate from warping, and to prevent the dielectric layer from being peeled off or being cracked, it is preferable that the linear thermal expansion coefficient of the glass composition of the dielectric layer be lower than that of the glass substrate by about 0 to 25 × 10⁻⁷/°C. When the dielectric layer has a higher dielectric constant, there is a problem that the amount of electric current that is fed to the electrodes increases and thereby the power consumption of the PDP increases.

Hence, preferably, the lead-free glass to be used for forming the dielectric layer of the PDP has the composition described above, a softening point of 600°C or lower, a linear thermal expansion coefficient of 60 × 10⁻⁷ to 85 × 10⁻⁷/°C, and a dielectric constant of 11 or lower. In order to achieve a manufacturing yield of at least 90% by preventing peeling off and cracks from occurring due to distortion or the like, it is further preferable that the lead-free glass have a linear thermal expansion coefficient of 65 × 10⁻⁷ to 85 × 10⁻⁷/°C.

When the dielectric layer of the front panel of the PDP is formed using the above-mentioned lead-free glass, an inorganic filler or an inorganic pigment may be added to the lead-free glass to improve the glass strength or adjust the thermal expansion coefficient without impairing the optical characteristics. Examples of the inorganic filler and the inorganic pigment include alumina, titanium oxide, zirconia, zircon, cordierite, quartz, etc.

Furthermore, the electrodes formed on the back panel of the PDP may be covered with the above-mentioned lead-free glass. Similarly, in this case, an inorganic filler or an inorganic pigment may be added to the lead-free glass for the purposes of improving the optical characteristics such as reflectivity as well as the glass strength and adjusting the thermal expansion coefficient. Examples of the inorganic filler and the inorganic pigment include alumina, titanium oxide, zirconia, zircon, cordierite, quartz, etc.

With the use of the dielectric layer containing the above-mentioned lead-free glass as its glass component, the number of electrons can be increased that are emitted from the protective layer and contribute to the discharge. As a result, the discharge time lag can be controlled and the variations in duration of the discharge time lag can be prevented from occurring. The present invention allows variations in the discharge to be prevented from occurring. Accordingly, for instance, by taking a measure of delaying the timing of pulse application for a predetermined period of time across the panel in the address period, the occurrence of writing failures due to the discharge time lag can be prevented efficiently.

Hence, the PDP 100 of the present invention allows reliable addressing to be carried out. Even when the application pulse width is reduced marginally in the address period, addressing can be carried out with a good probability. Thus, the PDP can be driven well without employing a dual scan system like in the case of conventional PDPs, and can be driven well by a driving system such as a so-called single scan system. In the single scan system, the number of driver ICs can be reduced to the half. As described above, the present invention makes it possible to simplify the configuration of the driving part and to obtain PDPs that can be produced at low cost.

In the single scan system, a relatively short period of time is allocated to the address period due to the nature of that driving method. However, when the duration of the discharge time lag is predicted beforehand according to the present invention, the timing for applying pulses reliably even in a short address period can be selected.

### Glass Paste

The above-mentioned lead-free glass generally is used in the state of powder. A glass paste can be obtained by adding a binder and a solvent to the powder of lead-free glass. The glass paste may contain components other than those mentioned above. It may contain, for instance, additives such as a surfactant, a development accelerator, an adhesive auxiliary, an antihalation agent, a preservation stabilizer, an antifoaming agent, an antioxidant, an ultraviolet absorber, pigments, dye, etc.

A dielectric layer that covers electrodes can be formed by applying a glass paste containing powder of the lead-free glass onto the electrodes and then baking it. The protective layer can be formed on the dielectric layer by a well-known method, for example, an electron-beam vapor deposition method, a sputtering method, or an ion plating method.

The resin (the binder) contained in the glass paste of the present invention is not particularly limited as long as it has lower reactivity to the low-melting lead-free glass powder. From the viewpoints of chemical stability, cost, safety, etc, preferable examples of the resin include cellulose derivatives, such as nitrocellulose, methyl cellulose, ethyl cellulose, and carboxymethyl cellulose, polyvinyl alcohol, a polyvinyl butyral, polyethylene glycol, carbonate-based resin, urethane-based resin, acryl-based resin, melamine-based resin, etc.

The solvent to be contained in the glass paste of the present invention is not particularly limited as long as it has lower reactivity to the low-melting lead-free glass powder. Preferably, the solvent is selected taking into consideration of chemical stability, cost, safety, and compatibility with the binder resin. Examples of the solvent that can be used herein include butyl acetate, 3-ethoxypropionic acid ethyl ester, ethylene glycol monoalkyl ethers such as ethylene glycol monomethyl ether, ethylene glycol monoethyl ether, ethylene glycol monopropyl ether, and ethylene glycol monobutyl ether, etc. Furthermore, the solvent can be, for instance, ethylene glycol monoalkyl ether acetates such as ethylene glycol monomethyl ether acetate, ethylene glycol monoethyl ether acetate, etc. The solvent also can be, for example, diethylene glycol dialkyl ethers such as diethylene glycol dimethyl ether, diethylene glycol diethyl ether, diethylene glycol dipropyl ether, diethylene glycol dibutyl ether, etc. Examples of the solvent also include propylene glycol monoalkyl ethers such as propylene glycol monomethyl ether, propylene glycol monoethyl ether, propylene glycol monopropyl ether, and propylene glycol monobutyl ether. Moreover, the solvent can be propylene glycol dialkyl ethers such as propylene glycol dimethyl ether, propylene glycol diethyl ether, propylene glycol dipropyl ether, propylene glycol dibutyl ether, etc. The solvent also can be propylene glycol alkyl ether acetates such as propylene glycol monomethyl ether acetate, propylene glycol monoethyl ether acetate, propylene glycol monopropyl ether acetate, propylene glycol monobutyl ether acetate, etc. Furthermore, examples of the solvent include lactic acid esters such as methyl lactate, ethyl lactate, butyl lactate, etc., and aliphatic carboxylic acid esters such as methyl formate, ethyl formate, amyl formate, methyl acetate, ethyl acetate, propyl acetate, isopropyl acetate, isobutyl acetate, amyl acetate, isoamyl acetate, hexyl acetate, octyl acetate, methyl propionate, ethyl propionate, butyl propionate, methyl butanoate (methyl butyrate), ethyl butanoate (ethyl butyrate), propyl butanoate (propyl butyrate), isopropyl butanoate (isopropyl butyrate), etc. In addition, the solvent can be carbonates such as ethylene carbonate, propylene carbonate, etc. and alcohols such as terpineol, benzyl alcohol, etc. Aromatic hydrocarbons such as toluene, xylene, etc. also can be used for the solvent. Furthermore, ketones such as methyl ethyl ketone, 2-heptanone, 3-heptanone, 4-heptanone, cyclohexanone, etc. also can be used. Examples of the solvent also include esters such as 2-hydroxypropionic acid ethyl ester, 2-hydroxy-2-methylpropionic acid ethyl ester, ethoxyethyl acetate, hydroxyethyl acetate, 2-hydroxy-3-methylbutyric acid methyl ester, 3-methoxypropionic acid methyl ester, 3-methoxypropionic acid ethyl ester, 3-methoxybutyl acetate, 3-methyl-3-methoxybutyl acetate, butyl carbitol acetate, 3-methyl-3-xnethoxybutyl propionate, 3-methyl-3-methoxybutyl butyrate, 2,2,4-trimethyl-1,3-pentanediol monoisobutylate, acetoacetic acid methyl ester, acetoacetic acid ethyl ester, pyruvic acid methyl ester, pyruvic acid ethyl ester, benzoic acid ethyl ester, and benzyl acetate. Furthermore, amide-based solvents also can be used including, for example, N-methylpyrrolidone, N,N-dimethylformamide, N-methylformamide, and N,N-dimethylacetamide. These solvents can be used individually or two or more of them can be used in combination.

The content of the solvent in the glass paste is adjusted in the range that allows the plasticity or fluidity (viscosity) of the paste to be suitable for the forming process or application process.

### PDP Production Method

An example of the method of producing the PDP 100 is described below. First, the method of producing the front panel 90 is described.

A plurality of linear transparent electrodes 103 and black electrode films 104 are formed on one principal plane of the flat front glass substrate 101. Next, after a silver paste is applied onto the black electrode films 104, the whole front glass substrate 101 is heated and thereby the silver paste is baked to form the bus electrode 105. Thus, the display electrodes 102 are formed.

Subsequently, the glass paste mentioned above is applied to the above-mentioned principal plane of the front glass substrate 101 by the blade coater method so as to cover the display electrodes 102. Thereafter, the whole front glass substrate 101 is kept at 90°C for 30 minutes and thereby the glass paste is dried, which then is baked at a temperature in the range of 560 to 590°C for 10 minutes. Thus, the dielectric layer 106 is formed.

Next, a film of magnesium oxide (MgO) is formed on the dielectric layer 106 by the electron-beam vapor deposition method, which then is baked to form the protective layer 107.

Thus, the front panel 90 is produced. The method of producing the back panel 91 is described below.

After a silver paste is applied to one principal plane of the flat back glass substrate 111 to form a plurality of lines, the whole back glass substrate 111 is heated and thereby the silver paste is baked. Thus, the address electrodes 112 are formed.

Subsequently, a glass paste is applied between adjacent address electrodes 112. The whole back glass substrate 111 then is heated and thereby the glass paste is baked. Thus, barrier ribs 114 are formed. The barrier ribs 114 may be formed with the above-mentioned glass paste or may be formed with another glass paste.

Next, phosphor ink of each color (R, G, and B) is applied between two adjacent barrier ribs 114. The back glass substrate 111 then is heated to about 500°C and thereby the above-mentioned phosphor ink is baked and the resin component (the binder) and the like contained in the phosphor ink are removed. Thus, the phosphor layer 115 is formed.

The front panel 90 and the back panel 91 then are bonded to each other using a sealing glass. Thereafter, the space thus sealed is evacuated to a high vacuum and the space then is charged with rare gas.

Thus, the PDP 100 is obtained. The PDP and the method of producing it that are described above are examples and the present invention is not limited thereto.

### EXAMPLES

Hereafter, the present invention is described further in detail using examples.

### Production and Evaluation of Lead-Free Glass

Lead-free glasses of the present invention and lead-free glasses of comparative examples were produced. The compositions of the lead-free glasses (Examples 1 to 24) of the present invention are indicated in Tables 1 and 2 while the compositions of the lead-free glasses (Comparative Examples 25 to 40) of the comparative examples are indicated in Table 3.

**Table 1**

| No. / Glass Composition | EXAMPLES | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| SiO₂ | 15.0 | 10.0 | 1.0 | 14.9 | 9.8 | | 1.6 | 1.4 | | | | 1.2 |
| B₂O₃ | 28.1 | 30.9 | 31.5 | 10.0 | 15.0 | 50.0 | 30.6 | 24.7 | 26.9 | 27.5 | 31.3 | 24.4 |
| ZnO | 27.0 | 28.1 | 26.4 | 33.9 | 35.7 | 26.1 | 32.3 | 42.3 | 50.0 | 27.1 | 26.8 | 38.0 |
| Al₂O₃ | 0.3 | 2.7 | 1.8 | 0.7 | 3.2 | 0.7 | 0.8 | 1.1 | 1.3 | 10.0 | 8.0 | 0.1 |
| Bi₂O₃ | 23.2 | 16.5 | 11.4 | 28.3 | 19.7 | 9.5 | 13.7 | 12.9 | 8.1 | 27.4 | 24.5 | 15.8 |
| CaO | | 5.6 | 17.2 | 5.4 | | | 1.3 | 5.6 | 2.6 | 1.4 | 3.3 | 7.3 |
| SrO | | | | 1.2 | 4.1 | | | | 2.2 | 2.8 | | 5.2 |
| BaO | 6.4 | 6.2 | 10.7 | 5.6 | 12.5 | 13.7 | 19.7 | 12.0 | 8.9 | 3.8 | 6.1 | 8.0 |
| Glass Transition Point(°C) | 489 | 486 | 483 | 489 | 489 | 469 | 475 | 474 | 469 | 468 | 473 | 470 |
| Softening Point(°C) | 590 | 584 | 579 | 588 | 586 | 571 | 571 | 569 | 563 | 594 | 579 | 569 |
| Linear Thermal Expansion Coefficient (×10⁻⁷/°C) | 63 | 62 | 70 | 74 | 72 | 65 | 71 | 69 | 68 | 64 | 65 | 72 |
| Relative Dielectric Constant | 10.3 | 10.2 | 9.6 | 10.9 | 10.3 | 8.9 | 10.0 | 9.7 | 9.8 | 10.7 | 10.3 | 10.1 |
| Glass Stability | AA | AA | AA | A | AA | AA | AA | AA | AA | A | AA | AA |
| Overal Evaluation | A | A | AA | A | AA | AA | AA | AA | AA | A | AA | AA |

**Table 2**

| No. / Glass Composition | EXAMPLES | | | | | | | | | | | |
|---|---|---|---|---|---|---|---|---|---|---|---|---|
| | 13 | 14 | 15 | 16 | 17 | 18 | 19 | 20 | 21 | 22 | 23 | 24 |
| SiO₂ | 1.6 | 1.1 | 3.8 | 3.5 | 2.5 | 0.8 | 3.4 | 0.8 | 3.2 | 0.3 | 1.4 | 0.6 |
| B₂O₃ | 24.2 | 35.4 | 28.2 | 28.0 | 38.2 | 29.7 | 36.5 | 30.2 | 34.2 | 26.7 | 33.3 | 28.4 |
| ZnO | 39.3 | 37.3 | 26.0 | 27.5 | 27.6 | 27.1 | 28.6 | 26.4 | 32.6 | 30.9 | 32.1 | 28.5 |
| Al₂O₃ | | 0.6 | 2.2 | 4.4 | 0.3 | 0.6 | 0.7 | 0.8 | 0.5 | 0.5 | 1.5 | 1.0 |
| Bi₂O₃ | 14.3 | 2.0 | 18.8 | 30.0 | 26.4 | 3.8 | 25.8 | 3.8 | 24.5 | 3.6 | 26.7 | 3.5 |
| CaO | 6.2 | 3.8 | 4.6 | 3.3 | 5.0 | 38.0 | | | | | 2.5 | 10.8 |
| SrO | 6.8 | 3.0 | | 1.8 | | | 5.0 | 38.0 | | | 0.9 | 4.9 |
| BaO | 7.6 | 16.8 | 16.4 | 1.5 | | | | | 5.0 | 38.0 | 1.6 | 22.3 |
| Glass Transition Point(°C) | 477 | 488 | 486 | 460 | 469 | 485 | 465 | 489 | 462 | 491 | 459 | 492 |
| Softening Point (°C) | 578 | 590 | 587 | 563 | 570 | 582 | 568 | 588 | 564 | 590 | 560 | 588 |
| Linear Thermal Expansion Coefficient (×10⁻⁷/°C) | 73 | 68 | 72 | 72 | 64 | 83 | 63 | 84 | 64 | 80 | 63 | 81 |
| Relative Dielectric Constant | 10.0 | 8.2 | 10.2 | 11.0 | 10.7 | 8.6 | 10.8 | 9.1 | 10.8 | 9.6 | 10.8 | 9.4 |
| Glass Stability | A | AA | AA | AA | AA | A | AA | A | AA | A | AA | A |
| Overall Evaluation | A | AA | AA | AA | A | A | A | A | A | A | A | A |

**Table 3**

| No. / Glass Composition | COMPARATIVE EXAMPLES | | | | | | | | | | | | | | | |
|---|---|---|---|---|---|---|---|---|---|---|---|---|---|---|---|---|
| | 25 | 26 | 27 | 28 | 29 | 30 | 31 | 32 | 33 | 34 | 35 | 36 | 37 | 38 | 39 | 40 |
| SiO₂ | 15.1 | 14.9 | | 7.0 | 1.3 | 1.9 | 1.9 | 0.2 | 2.9 | 0.8 | 2.8 | 0.3 | 2.9 | 0.3 | 1.1 | 0.3 |
| B₂O₃ | 22.4 | 9.8 | 50.2 | 28.7 | 28.4 | 32.2 | 36.3 | 29.8 | 29.6 | 29.1 | 33.7 | 30.2 | 34.6 | 26.2 | 34.7 | 27.4 |
| ZnO | 27.3 | 32.8 | 27.1 | 25.7 | 50.2 | 26.0 | 33.3 | 26.1 | 32.4 | 26.5 | 29.0 | 26.2 | 28.5 | 32.0 | 27.8 | 30.1 |
| Al₂O₃ | 0.5 | 2.5 | 0.1 | 5.1 | 2.2 | 10.2 | 4.4 | 6.6 | 0.6 | 1.3 | 0.8 | 1.1 | 1.1 | 0.9 | 1.6 | 0.7 |
| Bi₂O₃ | 29.3 | 29.2 | 8.3 | 12.5 | 6.6 | 19.7 | 1.7 | 30.2 | 29.7 | 3.8 | 29.0 | 4.0 | 28.1 | 2.2 | 30.0 | 3.2 |
| CaO | | 4.2 | | 9.4 | 4.3 | 2.1 | 4.2 | 4.4 | 4.8 | 38.5 | | | | | 1.8 | 15.0 |
| SrO | | 0.4 | | 7.1 | 2.6 | 1.6 | 2.9 | 2.7 | | | 4.7 | 38.2 | | | 1.0 | 9.8 |
| BaO | 5.4 | 6.2 | 14.3 | 4.5 | 4.4 | 6.3 | 15.3 | | | | | | 4.8 | 38.4 | 2.0 | 13.5 |
| Glass Transition Point (°C) | 498 | - | 481 | 496 | - | 499 | 506 | 475 | 468 | - | 462 | - | 458 | 496 | 462 | - |
| Softening Point(°C) | 602 | - | 578 | 603 | - | 601 | 604 | 567 | 564 | - | 561 | - | 560 | 601 | 558 | - |
| Linear Thermal Expansion Coefficient (×10⁻⁷/°C) | 60 | - | 59 | 72 | - | 62 | 65 | 68 | 59 | - | 58 | - | 58 | 81 | 59 | - |
| Relative Dielectric Constant | 10.8 | - | 8.6 | 9.9 | - | 10.0 | 7.9 | 11.3 | 10.8 | - | 10.6 | - | 10.7 | 10.3 | 10.7 | - |
| Glass Stability | A | C | A | A | C | A | A | A | A | C | A | C | A | B | A | C |
| Overall Evaluation | B | C | B | B | C | B | B | B | B | C | B | C | B | C | B | C |

| | | | | | | | | | | | | | | | | |
|---|---|---|---|---|---|---|---|---|---|---|---|---|---|---|---|---|
| (- : not vitrified) | | | | | | | | | | | | | | | | |

In Tables 1, 2, and 3, the compositions are defined by weight percentage. The raw materials of the glass were mixed together so that the compositions indicated in Tables 1 to 3 were obtained. The materials thus mixed together were put into a platinum crucible and then were heated in an electric furnace with a temperature of 1100 to 1200°C for one hour to be melted. Thereafter, the melted glass thus obtained was cooled rapidly by the brass-plate pressing method and then glass cullet was produced.

### Evaluation of Glass

A value of the second heat absorption peak measured with a macro differential thermal analyzer was employed as the softening point of the glass. The glass transition point and the linear thermal expansion coefficient were measured with a thermomechanical analyzer using a rod with a size of 4 mm × 4 mm × 20 mm that was formed from the remelted cullet. The relative dielectric constant was measured with an LCR meter at a frequency of 1 MHz using a plate with a size of 50 mm × 50 mm × 3 mm (thickness) that was formed from the remelted cullet and was provided with electrodes vapor-deposited on the surface thereof. The glass stability was evaluated through evaluation of water resistance, measurement of variations in enthalpy with a differential thermal analyzer, and observations of the presence of crystals by the X-ray diffraction method and with an optical microscope. Furthermore, the stability of the glasses according to the examples and the comparative examples also was evaluated.

Tables 1 to 3 show the evaluation results and overall evaluation. The definitions of "AA", "A", "B", and "C" employed to evaluate the glass stability are as follows:
AA: the composition vitrified, no variations in enthalpy were observed in the range of higher temperatures than the softening point, and no crystals were observed in the observations by the X-ray diffraction method and with an optical microscope;
A: the composition vitrified, and variations in enthalpy were observed in the range of higher temperatures than the softening point, but no crystals were observed in the observations by the X-ray diffraction method and with an optical microscope;
B: the composition vitrified, but variations in enthalpy were observed in the range of higher temperatures than the softening point, and no diffraction peak generated according to crystals was observed by the X-ray diffraction method but crystals were observed with an optical microscope; and
C: the composition did not vitrify during the glass production.

In Tables 1 to 3, the overall evaluation was made comprehensively with target criteria of a softening point lower than 600°C, preferably lower than 595°C, a relative dielectric constant of 11 or lower, and a linear thermal expansion coefficient in the range of 60 × 10⁻⁷ to 85 × 10⁻⁷/C°, preferably in the range of 65 × 10⁻⁷ to 85 × 10⁻⁷/C° and further taking into consideration safety as glass.

The definitions of "AA", "A", "B", and "C" employed for the overall evaluation are as follows:
AA: the composition was stable as glass, respective values indicating physical properties were within the range of preferable target values, and the respective physical properties were in balance;
A: the composition was stable as glass, and respective values indicating physical properties were within the range of target values, but at least one of the values indicating the physical properties was outside the range of the preferable target values;
B: the composition was stable as glass, but at least one of the values indicating the physical properties was outside the range of the target values; C: the composition did not vitrify and therefore was not available as a glass material.

As is apparent from Tables 1 and 2, the respective samples of Examples 1 to 24 had a linear thermal expansion coefficient of 60 to 85 × 10⁻⁷/C° at a temperature in the range of 30 to 300C°, a softening point of 600C° or lower, a relative dielectric constant of 11 or lower, and an excellent stability as glass.

Particularly, lead-free glasses of Examples 3, 5 to 9, 11, 12, and 14 to 16 each had a balance within the above-mentioned various physical properties, and highest stability as glass. Thus they had excellent characteristics.

On the other hand, the glasses of Comparative Examples 25 to 40 shown in Table 3 had problems in that the relative dielectric constant was higher than that of the respective samples of the examples, the thermal expansion coefficient was not within the target range, and glass was unstable. Accordingly, the glasses of the comparative examples were not preferable as glass to be used for forming a dielectric layer.

### Production and Evaluation of PDP

The following descriptions are directed to the production of PDPs and the results of evaluation thereof.

### Production of Lead-Free Glass Powder

Raw materials were mixed together so that the same compositions as those of the glasses of Examples 3, 5 to 9, 11, 12, and 14 to 16 described above that were excellent in various physical properties and glass stability were obtained. Subsequently, the raw materials thus mixed together were melted in an electric furnace with a temperature of 1100 to 1200C° for one hour using a platinum crucible. Thereafter, glass cullet was produced by a twin-roller method and then was crushed with a ball mill. Thus powder thereof was prepared.

Furthermore, powder of glass that was not the lead-free glass of the present invention (Comparative Examples 51 to 53) and powder of lead glass that was used commonly as a dielectric material (Comparative Example 101) were prepared as comparative examples.

Glass powders of Examples and Comparative Examples thus prepared had an average particle diameter in the range of 1.5 to 2.5 µm. Table 4 indicates compositions and average particle diameters of these glass powders.

**Table 4**

| No. / Glass Composition | EXAMPLES | | | | | | | | | | | COMPARATIVE EXAMPLES | | | |
|---|---|---|---|---|---|---|---|---|---|---|---|---|---|---|---|
| | 3 | 5 | 6 | 7 | 8 | 9 | 11 | 12 | 14 | 15 | 16 | 51 | 52 | 53 | 101 |
| SiO₂ | 1.0 | 9.8 | | 1.6 | 1.4 | | | 1.2 | 1.1 | 3.8 | 3.5 | 5.8 | 1.2 | | 38.6 |
| B₂O₃ | 31.5 | 15.0 | 50.0 | 30.6 | 24.7 | 26.9 | 31.3 | 24.4 | 35.4 | 28.2 | 28.0 | 29.7 | 34.0 | 32.5 | 6.2 |
| ZnO | 26.4 | 35.7 | 26.1 | 32.3 | 42.3 | 50.0 | 26.8 | 38.0 | 37.3 | 26.0 | 27.5 | 20.0 | 23.4 | 25.6 | 10.2 |
| Al₂O₃ | 1.8 | 3.2 | 0.7 | 0.8 | 1.1 | 1.3 | 8.0 | 0.1 | 0.6 | 2.2 | 4.4 | 4.6 | 1.5 | 7.6 | 3.4 |
| Bi₂O₃ | 11.4 | 19.7 | 9.5 | 13.7 | 12.9 | 8.1 | 24.5 | 15.8 | 2.0 | 18.8 | 30.0 | 20.1 | 11.8 | 26.1 | |
| CaO | 17.2 | | | 1.3 | 5.6 | 2.6 | 3.3 | 7.3 | 3.8 | 4.6 | 3.3 | 4.7 | 14.7 | 3.5 | 5.3 |
| SrO | | 4.1 | | | | 2.2 | | 5.2 | 3.0 | | 1.8 | | 2.2 | | |
| BaO | 10.7 | 12.5 | 13.7 | 19.7 | 12.0 | 8.9 | 6.1 | 8.0 | 16.8 | 16.4 | 1.5 | 15.1 | 11.2 | 4.7 | |
| PbO | | | | | | | | | | | | | | | 41.3 |
| Average Particle Diameter (µm) | 2.4 | 1.7 | 1.9 | 2.3 | 2.5 | 1.5 | 2.4 | 2.2 | 2.4 | 1.8 | 2.1 | 1.8 | 2.4 | 2.4 | 2.1 |
| Baking Temperature | 585 | 590 | 575 | 575 | 575 | 570 | 585 | 575 | 590 | 590 | 570 | 590 | 585 | 585 | 575 |
| Variations in Discharge | 89 | 62 | 91 | 65 | 58 | 56 | 86 | 60 | 61 | 92 | 82 | 99 | 98 | 95 | 100 |
| Relative Intensity | 0.63 | 0.77 | 0.61 | 0.76 | 0.80 | 0.81 | 0.65 | 0.78 | 0.78 | 0.61 | 0.68 | 0.59 | 0.59 | 0.60 | 0.57 |

### Preparation of Glass Paste

Ethyl cellulose that was resin and alpha-terpineol that was a solvent were mixed together to have a weight ratio of 5 : 30, which then was stirred. Thus a solution containing an organic component was prepared. Subsequently, this solution and the respective glass powders of the examples (Examples 3, 5 to 9, 11, 12, and 14 to 16) indicated in Table 4 were mixed together at a weight ratio of 65 : 35, which then was mixed and dispersed with three rollers. Thus glass pastes were prepared. In the same manner, glass pastes were prepared using the above-mentioned solution and the glass powders of the comparative examples (Comparative Example 51, 52, 53, and 101).

### Production of PDP

A material of ITO (transparent electrodes) was applied in a predetermined pattern onto the surface of a flat soda-lime glass sheet (a front glass substrate) with a thickness of about 2.6 mm and then was dried. Subsequently, a silver paste that was a mixture of silver powder and an organic vehicle was applied in the form of a plurality of lines. Thereafter, the front glass substrate was heated and thereby the silver paste was baked. Thus display electrodes were formed.

The above-mentioned glass paste was applied to the front panel on which the display electrodes had been formed, by a blade coater method. Thereafter, the front glass substrate was kept at 90C° for 30 minutes, so that the glass paste was dried. This then was baked at a temperature of 570 to 590C° for 10 minutes. Thus, a dielectric layer was formed.

Next, magnesium oxide (MgO) was deposited on the dielectric layer by the electron-beam vapor deposition method and then was baked. Thus, a protective layer was formed.

On the other hand, the back panel was produced by the method described below. First, address electrodes containing silver as its main component were formed into strips on a back glass substrate made of soda-lime glass by screen printing. Next, a dielectric layer was formed. Subsequently, barrier ribs were formed on the dielectric layer between adjacent address electrodes. The barrier ribs were formed through a repetition of the screen printing and the baking.

Next, phosphor pastes of red (R), green (G), and blue (B) were applied to surfaces of the barrier ribs and the surface of the dielectric layer disposed between barrier ribs, and then were dried and baked. Thus a phosphor layer was produced.

Subsequently, the front panel and the back panel thus produced were bonded to each other with sealing glass. Thereafter, the discharge space was evacuated to a high vacuum (about 1 × 10⁻⁴ Pa) and then was charged with Ne-Xe-based discharge gas so as to have a predetermined pressure. Thus, a PDP was produced.

### Evaluation of PDP

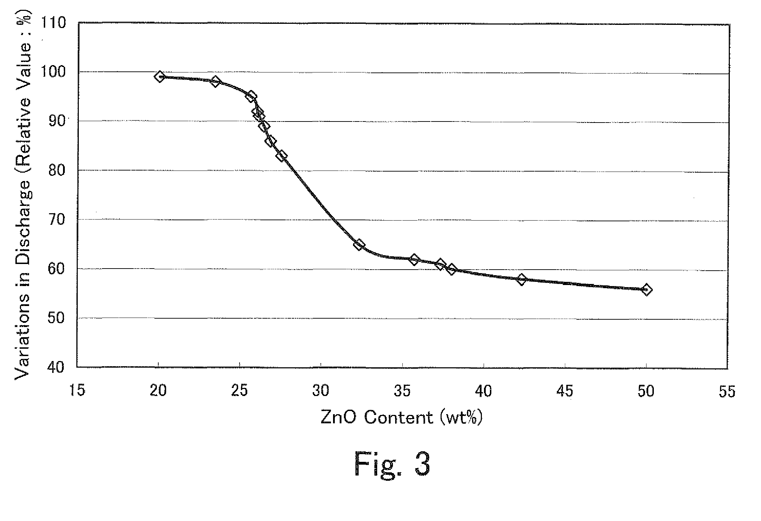

With respect to the PDPs thus produced, the relative magnitude of variations in discharge (variations in duration of the discharge time lag) was evaluated. Specifically, variations in discharge of each PDP were evaluated, with variations in discharge of the PDP produced using lead glass powder according to Comparative Example 101 being taken as 100%. The evaluation results are shown in Table 4. In addition, FIG. 3 shows the relationship between the ZnO content and the relative magnitude of variations in discharge.

As shown in FIG. 3, the variations in discharge decreased with an increase in ZnO content in the lead-free glass. When the ZnO content was about 26 wt% or more, the variations in discharge were reduced considerably. When it was about 32 wt% or more, the variations in discharge became stable at lower values.

As is apparent from the results described above, the PDP of the present invention had smaller variations in discharge as compared to conventional PDPs (the PDPs of the comparative examples). Accordingly, in the PDP of the present invention, even when a discharge time lag occurs in the address period, addressing can be secured by delaying the timing for applying address pulses according to the duration of the discharge time lag or adjusting the pulse width. Thus, the present invention makes it possible to obtain PDPs having excellent image display performance.

### Evaluation of Protective Layer

The samples indicated in Table 4 and FIG. 3 were evaluated by the cathode luminescence method. The cathode luminescence method (CL) is an analysis method that is carried out as follows. That is, a sample is irradiated with electron beams, the emission spectrum that is generated during the process of relaxation of the energy is detected, and then information about the configuration of the sample and the presence of defects in the sample is obtained from the emission spectrum. Specifically, with respect to each sample, the cathode luminescence was measured and based on the result, the relationship between the variations in discharge and the emission spectrum that relates closely to the characteristics of the protective layer was examined.

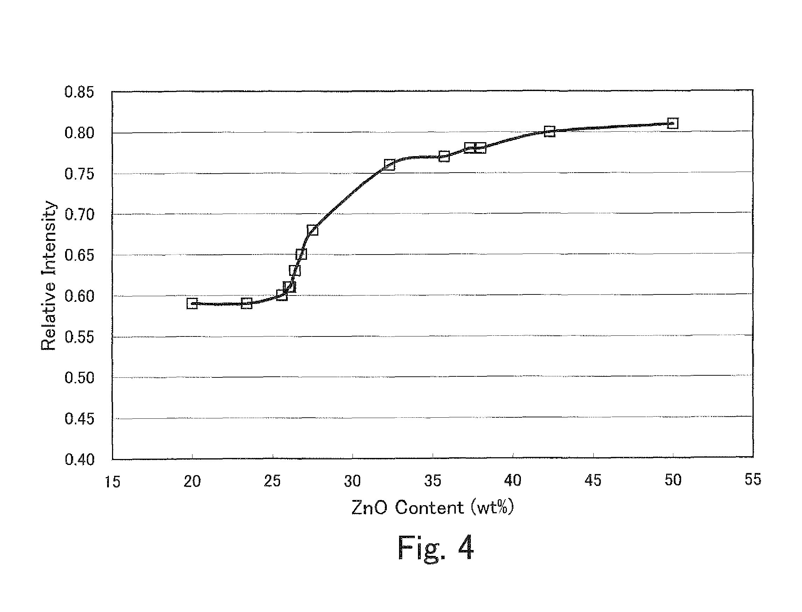

Three peaks (with emission wavelengths of about 410 nm, about 510 nm, and about 740 nm, respectively) were observed in the spectrum of each sample. The wavelengths of the respective peaks have a correlation with energy of the defect level present in the band gap of the protective layer. Hence, the higher the peak at an emission wavelength of about 740 nm, the greater the number of electrons that contribute to the discharge and that are emitted from the protective layer. Accordingly, the discharge time lag can be controlled and the effect of reducing the variations in discharge also can be expected. Table 4 shows the relative intensity of the peak at an emission wavelength of about 740 nm with respect to the peak intensity at an emission wavelength of about 410 nm. Furthermore, the results are plotted versus the ZnO content, which is shown in FIG. 4.

As shown in Table. 4, the PDP produced using the glass of the example had higher relative intensity as compared to the PDP produced using the glass of the comparative example. Furthermore, as shown in FIG. 4, the relative intensity of the peak at an emission wavelength of about 740 nm with respect to the peak intensity at an emission wavelength of about 410 nm increased with an increase in the ZnO content. Particularly, the relative intensity increased considerably when the ZnO content was 26 wt% and more while the relative intensity became stable and increased gently when the ZnO content was 32 wt% and more. Thus, in order to reduce the discharge time lag, the ZnO content is preferably at least 26 wt%, more preferably at least 32 wt%.

### INDUSTRIAL APPLICABILITY

The present invention is applicable to plasma display panels.

## Claims

1. A plasma display panel comprising a display electrode and an address electrode,
the plasma display panel comprising a dielectric layer formed on at least one electrode selected from the group consisting of the display electrode and the address electrode,
wherein the dielectric layer includes glass having the following composition, as its main constituent element:
0 to 15 wt% SiO₂;
10 to 50 wt% B₂O₃;
26 to 50 wt% ZnO;
0 to 10 wt% Al₂O₃;
2 to 30 wt% Bi₂O₃;
0 to 0.1 wt% PbO; and
5 to 38 wt% RO,
where RO denotes at least one oxide selected from the group consisting of CaO, SrO, and BaO.

2. The plasma display panel according to claim 1, further comprising a protective layer that is formed to cover the dielectric layer,
wherein the protective layer includes MgO as its main component.

3. The plasma display panel according to claim 2, wherein the glass has a linear thermal expansion coefficient in a range of 60 × 10⁻⁷ to 85 × 10⁻⁷/C° at 30 to 300C°.

4. The plasma display panel according to claim 2, wherein the dielectric layer is formed by applying a glass paste containing powder of the glass, a solvent, and resin so as to cover the at least one electrode and then baking it.

## Amended claims

### Amended claims under Art. 19.1 PCT

**1.** (Amended) A plasma display panel comprising a display electrode and an address electrode,
the plasma display panel comprising a dielectric layer formed on at least one electrode selected from the group consisting of the display electrode and the address electrode,
wherein the dielectric layer includes glass having the following composition, as its main constituent element:
0 to 15 wt% SiO₂;
10 to 50 wt% B₂O₃;
26 to 50 wt% ZnO;
0.01 to 10 wt% Al₂O₃;
2 to 30 wt% Bi₂O₃;
0 to 0.1 wt% PbO; and
5 to 38 wt% RO,
where RO denotes at least one oxide selected from the group consisting of CaO, SrO, and BaO.

**2.** The plasma display panel according to claim 1, further comprising a protective layer that is formed to cover the dielectric layer,
wherein the protective layer includes MgO as its main component.

**3.** The plasma display panel according to claim 2, wherein the glass has a linear thermal expansion coefficient in a range of 60 × 10⁻⁷ to 85 × 10⁻⁷/C° at 30 to 300C°.

**4.** The plasma display panel according to claim 2, wherein the dielectric layer is formed by applying a glass paste containing powder of the glass, a solvent, and resin so as to cover the at least one electrode and then baking it.
